# EUROPEAN PATENT SPECIFICATION

(11) **EP 4 166 592 B1**
(45) Date of publication and mention of the grant of the patent: **14.08.2024**
(21) Application number: 22199731.5
(22) Date of filing: 05.10.2022
(51) Int. Cl.: C08G 59/24, C08K 5/3492, C09J 163/00

(54) **EPOXY-BASED COMPOSITION AND TWO-COMPONENT EPOXY ADHESIVE COMPOSITION WITH HIGH SHEAR STRENGTH COMPRISING THE SAME**
EPOXIDBASIERTE ZUSAMMENSETZUNG UND ZWEIKOMPONENTEN-EPOXIDKLEBSTOFFZUSAMMENSETZUNG MIT HOHER SCHERFESTIGKEIT DAMIT
COMPOSITION À BASE D'ÉPOXY ET COMPOSITION ADHÉSIVE ÉPOXY À DEUX COMPOSANTS PRÉSENTANT UNE RÉSISTANCE AU CISAILLEMENT ÉLEVÉE COMPRENANT CELLE-CI

(30) Priority: 12.10.2021 KR 20210134791
(43) Date of publication of application: 19.04.2023
(73) Proprietor: Pusan National University Industry-University Cooperation Foundation, Busan 46241 (KR)
(72) Inventor: CHOE, Youngson, 47747 Busan (KR)
(74) Representative: Laine IP Oy

(56) References cited:
- WO-A2-2016/099922
- JP-A- 2007 291 368
- JP-B2- 4 206 371
- WANG YONGZHEN ET AL: "Synthesis of maleimido-substituted aromatic s-triazine and its application in flame-retarded epoxy resins", POLYMER DEGRADATION AND STABILITY, vol. 99, 1 January 2014 (2014-01-01), GB, pages 27 - 34, XP093005984, ISSN: 0141-3910, DOI: 10.1016/j.polymdegradstab.2013.12.015
- YOU GEYUN ET AL: "The synthesis and characterization of a novel phosphorus-nitrogen containing flame retardant and its application in epoxy resins", JOURNAL OF APPLIED POLYMER SCIENCE, vol. 131, no. 22, 19 June 2014 (2014-06-19), US, pages n/a - n/a, XP093005988, ISSN: 0021-8995, DOI: 10.1002/app.41079

## Description

### BACKGROUND

### 1. Field

The present disclosure relates to an epoxy-based composition and a two-component epoxy adhesive composition comprising the same.

### 2. Description of Related Art

An adhesive composition may replace or improve conventional bonding means such as screws, bolts, nails, staples, rivets and metal fusing processes. The adhesive is widely used not only in real life, but also in industries that require high performance, such as the automobile industry and the aerospace industry. In order for this adhesive composition to be used for a suitable purpose, high mechanical strength thereof is required.

Among adhesive compositions, a two-component adhesive composition is an adhesive composition that realizes adhesion via a chemical reaction by mixing two compositions in an adhesion process. Because a conventional adhesive composition realizes an adhesive force via contact with air or drying, the adhesive force that may be realized by an material contained in the adhesive composition is inherently limited, and thus the limited adhesive force is also partially lost during a storage process. To the contrary, in the two-component adhesive composition, the realization of the adhesive force does not start in the storage state, so that the loss of adhesive strength during the storage is small. A chemical curing reaction is initiated only when the adhesive force is realized in the adhesion process, such that the adhesive force that can be realized by the material contained in the two-component adhesive composition is inherently strong. Among these two-component adhesive compositions, a two-component epoxy adhesive composition is generally used.

The two-component epoxy adhesive composition is composed of a resin part and a curing agent part. Thus, when the resin part and the curing agent part are mixed with each other, a curing reaction that realizes adhesion is initiated. Changing components contained in the resin part and the curing agent part may allow a mechanical strength of the two-component epoxy adhesive composition to be realized based on use purpose thereof. In particular, when the two-component epoxy adhesive composition is exposed to harsh environments such as machines, automobiles, or aircraft, high mechanical strength such as high tensile and shear strengths is required. Thus, a component of the two-component epoxy adhesive composition which can achieve the high shear strength should be identified.

Wang et al. ("Synhesis of maleimido-substituted aromatic s-triziane and its application is flame-retardant epoxy resins", Polymer degradation and stability, vol. 99, 2014-01-01, pages 27-34) describes a synthesis of maleimido-substituted aromatic s-trizine and its application in flame-retarded epoxy resins. You et al. ("The synthesis and characterization of a novel phosphorous-nitrogen containing flame retardant and its application in epoxy resins", Journal of applied polymer science, vol. 131, no. 22, 2014-06-19, pages n/a-n/a), in turn, discloses a synthesis of phosphorous-nitrogen containing flame retardant and its application in epoxy resins. Patent publication JP 2007 291368 describes a resin composition comprising cyanate ester resin, an anthracene type epoxy resin and a thermoplastic resin, the resin composition being suitable for forming an insulating layer.

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

One purpose of the present disclosure is to provide an epoxy-based composition as a component of a two-component epoxy adhesive composition that may achieve high shear strength.

Another purpose of the present disclosure is to provide a two-component epoxy adhesive composition comprising the epoxy-based composition.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

A first aspect of the present disclosure provides an epoxy-based composition comprising: a cyanurate compound having a following Chemical Formula (II); and an epoxy resin,

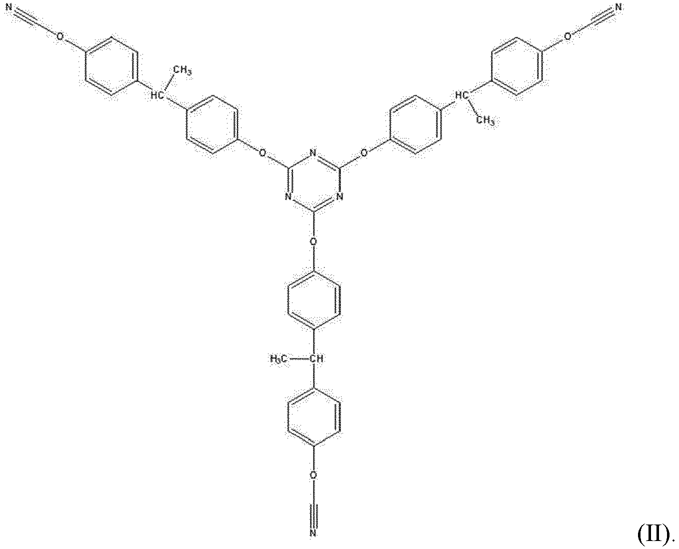

In one implementation of the first aspect, the epoxy resin may include a diepoxy-based resin.

In one implementation of the first aspect, the epoxy resin may include an aromatic ring.

In one implementation of the first aspect, the epoxy resin may include a naphthalene-based diepoxy-based resin having a following Chemical Formula (III): 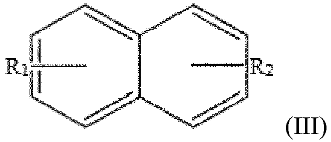 where each of R₁ and R₂ may independently represent an epoxy-containing functional group.

In one implementation of the first aspect, each of R₁ and R₂ may independently represent a functional group having a following Chemical Formula (IV): 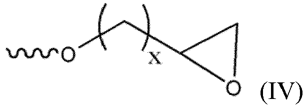 where x may be an integer from 1 to 5.

In one implementation of the first aspect, in the Chemical Formula (IV), x may be 1.

In one implementation of the first aspect, the epoxy resin may include an epoxy resin having a following Chemical Formula (V):

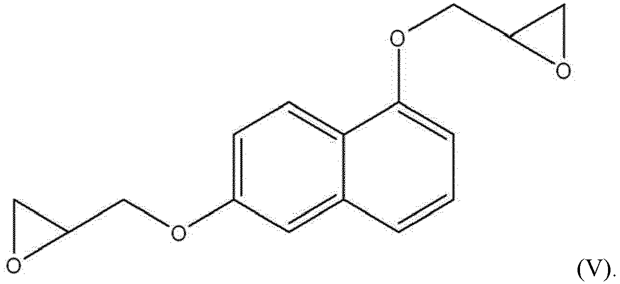

In one implementation of the first aspect, a ratio of a weight of the cyanurate compound and a weight of the epoxy resin may be in a range of 1:9 to 9:1.

In one implementation of the first aspect, a ratio of a weight of the cyanurate compound and a weight of the naphthalene-based diepoxy-based resin may be in a range of 6:1 to 8:1.

Under the above configuration, the epoxy-based composition according to the embodiment of the present disclosure may impart high shear strength to the two-component epoxy adhesive composition.

A second aspect of the present disclosure provides a two-component epoxy adhesive composition comprising: a resin part; and a curing agent part, wherein the resin part contains an epoxy adhesive intermediate composition, wherein the epoxy adhesive intermediate composition includes the epoxy-based composition comprising the cyanurate compound having the above Chemical Formula (II) and the epoxy resin.

In the second aspect, the cyanurate compound has the above Chemical Formula (II).

In one implementation of the second aspect, a ratio of a weight of the cyanurate compound and a weight of the epoxy resin may be in a range of 1:9 to 9:1.

In one implementation of the second aspect, a shear strength of the two-component epoxy adhesive composition at room temperature may be in a range of 19.5 to 25 MPa.

A third aspect of the present disclosure provides a two-component epoxy adhesive composition comprising: a resin part; and a curing agent part, wherein the resin part contains an epoxy adhesive intermediate composition, wherein the epoxy adhesive intermediate composition includes the epoxy-based composition comprising the cyanurate compound having the above Chemical Formula (II) and the epoxy resin, wherein the epoxy resin may include a diepoxy-based resin.

In one implementation of the third aspect, the epoxy resin may include an aromatic ring.

In one implementation of the third aspect, the epoxy resin may include a naphthalene-based diepoxy-based resin having the above Chemical Formula (III), where each of R₁ and R₂ may independently represent an epoxy-containing functional group.

In one implementation of the third aspect, each of R₁ and R₂ may independently represent a functional group having the above Chemical Formula (IV), where x may be an integer from 1 to 5.

In one implementation of the third aspect, in the Chemical Formula (IV), x may be 1.

In one implementation of the third aspect, the epoxy resin may include an epoxy resin having the above Chemical Formula (V).

In one implementation of the third aspect, a shear strength at 115 to 125 °C of the two-component epoxy adhesive composition may be in a range of 10.5 to 15 MPa.

As described above, the epoxy-based composition according to an embodiment of the present disclosure may impart the high shear strength to the

The two-component epoxy adhesive composition according to an embodiment of the present disclosure may have high shear strength at room and high temperatures.

In addition to the effects as described above, specific effects in accordance with the present disclosure will be described together with the detailed description for carrying out the disclosure.

### DETAILED DESCRIPTIONS

Examples of various embodiments are illustrated and described further below. It will be understood that the description herein is not intended to limit the claims to the specific embodiments described. On the contrary, it is intended to cover alternatives, modifications, and equivalents as may be contained within the spirit and scope of the present disclosure as defined by the appended claims.

Further, descriptions and details of well-known steps and elements are omitted for simplicity of the description. Furthermore, in a following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

The terminology used herein is for the purpose of describing particular embodiments only and is not intended to limit the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In descriptions of temporal relationships, for example, temporal precedent relationships between two events such as "after", "subsequent to ", "before", etc., another event may occur therebetween unless "directly after", "directly subsequent" or "directly before" is not indicated.

The features of the various embodiments of the present disclosure may be partially or entirely combined with each other, and may be technically associated with each other or operate with each other. The embodiments may be implemented independently of each other and may be implemented together in an association relationship.

An epoxy-based composition of the present disclosure comprises a cyanurate compound; and an epoxy resin.

As used herein, the "cyanurate compound" refers to a compound having a following Chemical Formula (I):

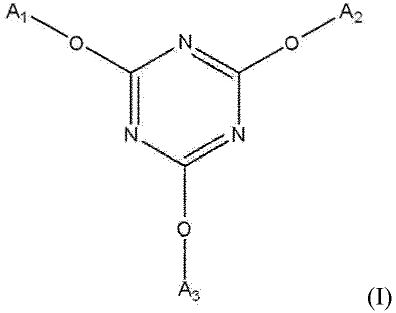

In one embodiment, each of A₁, A₂ and A₃ may be an aryl-based functional group. As used herein, the "aryl-based functional group" refers to a functional group including an aromatic hydrocarbon. Non-limiting examples thereof may include a phenyl group, a tolyl group, a xylene group, a naphthyl group, derivatives thereof, and combinations thereof. Further, as used herein, "aryl cyanurate compound" refers to a compound in which each of A₁, A₂, and A₃ is an aryl-based functional group in the Chemical Formula (I).

In one embodiment, each of A₁, A₂, and A₃ may be independently selected from a group of aryl-based functional groups derived from bisphenol-derived cyanate ester.

As used herein, "bisphenol" refers to a group of compounds in which phenol is bonded to each of both opposing sides of a carbon atom, wherein each of remaining two reaction sites of the carbon atom except for the both opposing sides thereof may be bonded to each functional group or a single unsaturated functional group. The phenol bonded to each of both opposing sides of the carbon atom may include a functional group. Non-limiting examples of bisphenol may include bisphenol A, bisphenol AP, bisphenol AF, bisphenol B, bisphenol BP, bisphenol C, bisphenol C2, bisphenol E, bisphenol F, bisphenol G, bisphenol M, bisphenol S, bisphenol P, bisphenol PH, bisphenol TMC, bisphenol Z, dinitrobisphenol A and tetrabromobisphenol A, derivatives thereof, and combinations thereof.

As used herein, "cyanate ester" refers to a group of compounds in which a hydrogen atom of OH of a phenol group (phenolic OH) is substituted with a cyanide group. Therefore, as used herein, "bisphenol-derived cyanate ester" refers to a group of compounds in which the hydrogen atom of the phenol group contained in bisphenol is substituted with a cyanide group. Non-limiting examples of the bisphenol-derived cyanate ester may include bisphenol A-derived cyanate ester, bisphenol AP-derived cyanate ester, bisphenol AF-derived cyanate ester, bisphenol B-derived cyanate ester, bisphenol BP-derived cyanate ester, bisphenol C-derived cyanate ester, bisphenol C2-derived cyanate ester, bisphenol E-derived cyanate ester, bisphenol F-derived cyanate ester, bisphenol G-derived cyanate ester, bisphenol M-derived cyanate ester, bisphenol S-derived cyanate ester, bisphenol P-derived cyanate ester, bisphenol PH-derived cyanate ester, bisphenol TMC-derived cyanate ester, bisphenol Z-derived cyanate ester, dinitrobisphenol A-derived cyanate ester, tetrabromobisphenol A-derived cyanate ester, derivatives thereof and combinations thereof.

As used herein, "a functional group derived from a compound α" may exist so as to allow at least one atom of the compound α to be substituted with at least one other atom or to react with another reactive site and thus exists or may exist in a form of a substituent of another compound. Therefore, as used herein, "functional group derived from cyanate ester" may exist so as to allow at least one atom of cyanate ester as defined above to be substituted with at least one other atom, or to react with another reactive site and thus exists or may exist in a form of a substituent of another compound. In one embodiment, at least one atom of the cyanate ester may be a -CN group at an end of the cyanate ester. In another embodiment, at least one atom of the cyanate ester may be an -OCN group at an end of the cyanate ester.

In particular, the cyanurate compound contained in the epoxy-based composition of the present disclosure has a following Chemical Formula (II).

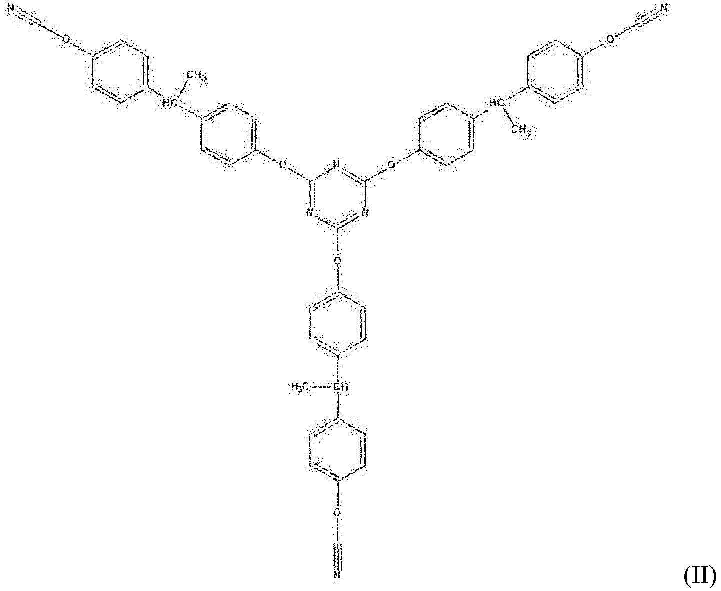

As defined herein, the Chemical Formula (II) is identical with a Chemical Formula of a compound in which a functional group of the cyanurate compound is substituted with an aryl-based functional group derived from bisphenol E-derived cyanate ester.

In one example, the epoxy resin contained in the epoxy-based composition according to an embodiment of the present disclosure may include a diepoxy-based resin. As used herein, the term "diepoxy" means a compound having at least two epoxide functional groups in a form of a triangular ring including one oxygen atom and two carbon atoms. In one embodiment, the diepoxy-based resin may contain two epoxide functional groups.

In one embodiment, the diepoxy-based resin may include an aromatic ring. As used herein, "aromatic ring" means a cyclic compound having aromaticity. Since the diepoxy-based resin includes the aromatic ring, the epoxy resin of the epoxy-based composition according to an embodiment of the present disclosure may have a form in which a cyclic compound having aromaticity is substituted with two or more epoxide groups. Non-limiting examples of the cyclic compound having the aromaticity may include benzene, phenol, toluene, xylene, and naphthalene.

In one embodiment, the epoxy resin may include a naphthalene-based epoxy-based resin.

In one embodiment, the epoxy resin may include a naphthalene-based diepoxy-based resin having a following Chemical Formula (III). 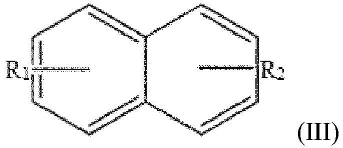 where each of R₁ and R₂ may be an epoxy-containing functional group.

Each of R₁ and R₂ may be a functional group bonded to each of two rings of naphthalene, and a bonding position thereof is not particularly limited. In one embodiment, the bonding position may be 1,5- or 1,6-.

Each of R₁ and R₂ may be a functional group having a following Chemical Formula (IV). 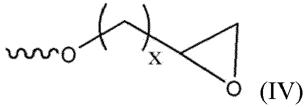 where x may be an integer from 1 to 5.

In one embodiment, x in the Chemical Formula (IV) may be 1.

In one embodiment, each of R₁ and R₂ may be a functional group in a form where x in the Chemical Formula (IV) is 1 and R₁ and R₂ may bind to naphthalene of the Chemical Formula (III) at 1,5- or 1,6 positions, respectively.

Thus, in one embodiment, the epoxy resin may include an epoxy resin having a following Chemical Formula (V).

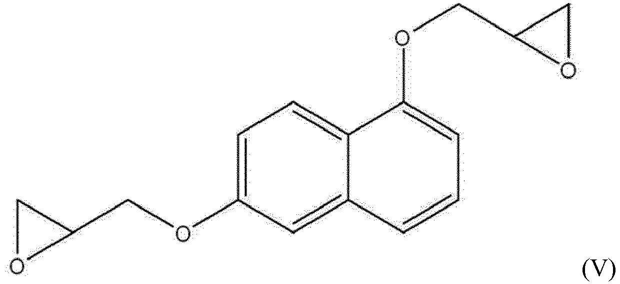

In an embodiment of the present disclosure, a composition ratio of the cyanurate compound and the epoxy resin may be variously selected. In one embodiment, a ratio of a weight of the cyanurate compound and a weight of the epoxy resin may be in a range of about 1:9 to 9:1.

In one embodiment in which the epoxy resin is a naphthalene-based diepoxy-based resin as in the above-described embodiment, a ratio of a weight of the cyanurate compound and a weight of the naphthalene-based diepoxy-based resin may be in a range of about 6:1 to 8:1.

A two-component epoxy adhesive composition of the present disclosure comprises a resin part; and a curing agent part, wherein the resin part includes the epoxy-based composition according to an embodiment of the present disclosure.

As used herein, each of the resin part and the curing agent part of the two-component epoxy adhesive composition may contain a component that a person skilled in the art can easily select for preparing the Non-limiting examples of the component may include another type of an epoxy resin, another type of cyanurate or another type of amine, analogs thereof, and combinations thereof.

In one embodiment, the epoxy-based composition according to an embodiment of the present disclosure may comprise a cyanurate compound having the above Chemical Formula (I); and an epoxy resin. In one embodiment, in the cyanurate compound, each of A₁, A₂ and A₃ in the Chemical Formula (I) may be independently selected from a group of aryl-based functional groups derived from bisphenol-derived cyanate ester. In particular, the cyanurate compound has the Chemical Formula (II). In one embodiment, a ratio of a weight of the cyanurate compound and a weight of the epoxy resin may be in a range of about 1:9 to 9:1. Under the configuration and the composition as described above, the two-component epoxy adhesive composition according to an embodiment of the present disclosure may have a shear strength in a range of about 19.5 to 25 MPa at room temperature.

A two-component epoxy adhesive composition of the present disclosure comprises a resin part; and curing agent part, wherein the resin part includes an epoxy-based composition according to another embodiment of the present disclosure. In one embodiment, the epoxy-based composition according to an embodiment of the present disclosure may comprise a cyanurate compound having the Chemical Formula (I); and an epoxy resin. In one embodiment, the epoxy resin may include a diepoxy-based resin. In one embodiment, the epoxy resin may include an aromatic ring. In one embodiment, the epoxy resin may include a naphthalene-based diepoxy-based resin having the Chemical Formula (III). In one embodiment, each of R₁ and R₂ in the Chemical Formula (III) may be a functional group having the Chemical Formula (IV). In one embodiment, x in the Chemical Formula (IV) may be 1. In one embodiment, the epoxy resin may include an epoxy resin having the Chemical Formula (V). In one embodiment, a ratio of a weight of the cyanurate compound and a weight of the naphthalene-based diepoxy-based resin may be in a range of about 6:1 to 8:1. Under the configuration and the composition as described above, the two-component epoxy adhesive composition according to an embodiment of the present disclosure may have a shear strength in a range of 10.5 to 15 MPa at 115 to 125°C.

Hereinafter, Examples of the present disclosure will be described in detail. However, the Examples as described below are only some implementations of the present disclosure, and the scope of the present disclosure is not limited to the following Examples.

### [Present Example 1]

10 parts by weight of TETA (triethylenetriamine), 15 parts by weight of ATBN (amineterminated butadiene acrylonitrile) 1300X16, 6 parts by weight of Ancamine K54, 10 parts by weight of Jaffamine T-403, and 4 parts by weight of DICY (Dicyandiamide) were mixed with each other to prepare a curing agent part. 65 parts by weight of YD128, 10 parts by weight of naphthalene-based epoxy (2,2'-((naphthalene-1,6-diylbis(oxy))bis(methylene))bis(oxirane)), 20 parts by weight of aryl cyanurate (2,4,6-tris(4-(1-(4-cyanatophenyl)ethyl)phenoxy)-1,3,5-triazine) derived from bisphenol E-derived from cyanate ester, and 5 parts by weight of 1,6-HDGE as a diluent were prepared. YD-128 and naphthalene-based epoxy were mixed with each other and then a mixture was stirred at room temperature for 10 minutes. Then, an amount corresponding to 2/3 of an added amount of aryl cyanurate was added thereto, and the mixture was stirred for 20 minutes while maintaining the temperature at 130°C. After the stirring, an amount corresponding to the remaining 1/3 of the added amount of aryl cyanurate was added thereto, and the mixture was further stirred for 40 minutes. Thus, a two-component epoxy adhesive composition according to Present Example 1 of the present disclosure including the resin part and the curing agent part was prepared.

### [Present Example 2]

A two-component epoxy adhesive composition was prepared in the same manner as in Present Example 1, except that 45 parts by weight of YD 128, 10 parts by weight of naphthalene-based epoxy, and 40 parts by weight of aryl cyanurate were added to the resin part. Thus, a two-component epoxy adhesive composition according to Present Example 2 of the present disclosure was prepared

### [Present Example 3]

A two-component epoxy adhesive composition was prepared in the same manner as in Present Example 1, except that 25 parts by weight of YD 128, 10 parts by weight of naphthalene-based epoxy, and 60 parts by weight of aryl cyanurate were added to the resin part. Thus, a two-component epoxy adhesive composition according to Present Example 3 of the present disclosure was prepared.

### [Present Example 4]

A two-component epoxy adhesive composition was prepared in the same manner as in Present Example 1, except that 5 parts by weight of YD 128, 10 parts by weight of naphthalene-based epoxy, and 80 parts by weight of aryl cyanurate were added to the resin part. Thus, a two-component epoxy adhesive composition according to Present Example 4 of the present disclosure was prepared.

### [Present Example 5]

A two-component epoxy adhesive composition was prepared in the same manner as in Present Example 1, except that 25 parts by weight of YD 128, 10 parts by weight of naphthalene-based epoxy, and 60 parts by weight of aryl cyanurate were added to the resin part, and 10 parts by weight of nanocellulose short fibers was further added to the composition. Thus, a two-component epoxy adhesive composition according to Present Example 5 of the present disclosure was prepared.

### [Present Example 6]

A two-component epoxy adhesive composition was prepared in the same manner as in Present Example 1, except that 25 parts by weight of YD 128, 10 parts by weight of naphthalene-based epoxy, and 60 parts by weight of aryl cyanurate were added to the resin part, and 10 parts by weight of a core-shell rubber was further added to the composition. Thus, a two-component epoxy adhesive composition according to Present Example 6 of the present disclosure was prepared.

### [Present Example 7]

A two-component epoxy adhesive composition was prepared in the same manner as in Present Example 1, except that 55 parts by weight of YD 128 and 40 parts by weight of aryl cyanurate were added to the resin part, and no naphthalene-based epoxy was added thereto. Thus, a two-component epoxy adhesive composition according to Present Example 7 of the present disclosure was prepared.

### [Comparative Example 1]

A two-component epoxy adhesive composition was prepared in the same manner as in Present Example 1, except that 95 parts by weight of YD 128 was added to the resin part, and naphthalene-based epoxy and aryl cyanurate were not added thereto. Thus, a two-component epoxy adhesive composition according to Comparative Example 1 of the present disclosure was prepared.

### [Comparative Example 2]

A two-component epoxy adhesive composition was prepared in the same way as in Present Example 1, except that 55 parts by weight of YD 128 and 40 parts by weight of naphthalene epoxy were added to the resin part and aryl cyanurate was not added thereto. Thus, a two-component epoxy adhesive composition according to Comparative Example 2 of the present disclosure was prepared.

### [Experimental Example 1]

Two specimens, each having a width of 25 mm, a length of 100 mm, and a thickness of 1.2 mm were prepared. The two specimens overlapped each other by 12.7 mm of the length. The resin part and the curing agent part of the two-component epoxy adhesive composition according to each of Present Examples and Comparative Examples were mixed with each other, and the two-component epoxy adhesive composition as the mixture of a thickness of 0.2 mm and of 15 g was applied on the two specimens. Both specimens were fixed with clips, and the two-component epoxy adhesive composition according to each of Present Examples and Comparative Examples was left at 23°C to cure the same. After the two-component epoxy adhesive composition according to each of Present Examples and Comparative Examples had been cured, the specimen was mounted on a UTM at room temperature and was pulled at a rate of 10 mm per minute according to ASTM D 1002 to measure shear strength. Table 1 is a table showing the experimental results according to Experimental Example 1.

**Table 1**

| Present Example/ Comparati ve Example | Present Example 1 | Present Example 2 | Present Example 3 | Present Example 4 | Present Example 5 | Present Example 6 | Present Example 7 | Compara tive Example 1 | Compara tive Example 2 |
|---|---|---|---|---|---|---|---|---|---|
| Shear strength (MPa) | 19.7 | 20.3 | 20.3 | 20.1 | 21.5 | 23.4 | 21.4 | 19.5 | 13.6 |

Referring to Table 1, it may be identified that, in all of Present Examples of the two-component epoxy adhesive composition according to an embodiment of the present disclosure including Present Example 7 in which aryl cyanurate is added to the resin part and naphthalene-based epoxy is not added thereto, the shear strength is improved compared to that in Comparative Example 1 in which neither naphthalene-based epoxy nor aryl cyanurate is added to the resin part or in Comparative Example 2 in which only naphthalene-based epoxy is added thereto.

### [Experimental Example 2]

Two specimens, each having a width of 25 mm, a length of 100 mm, and a thickness of 1.2 mm were prepared. The two specimens overlapped each other by 12.7 mm of the length. The resin part and the curing agent part of the two-component epoxy adhesive composition according to each of Present Examples and Comparative Examples were mixed with each other, and the two-component epoxy adhesive composition as the mixture of a thickness of 0.2 mm and of 15 g was applied on the two specimens. Both specimens were fixed with clips, and the two-component epoxy adhesive composition according to each of Present Examples and Comparative Examples was left at 23°C to cure the same. After the two-component epoxy adhesive composition according to each of Present Examples and Comparative Examples had been cured, the specimen was mounted on a UTM at 120° C and was pulled at a rate of 10 mm per minute according to ASTM D 1002 to measure shear strength. Table 2 is a table showing the experimental results according to Experimental Example 2.

**Table 2**

| Present Example/ Comparati ve Example | Present Example 1 | Present Example 2 | Present Example 3 | Present Example 4 | Present Example 5 | Present Example 6 | Present Example 7 | Compara tive Example 1 | Compara tive Example 2 |
|---|---|---|---|---|---|---|---|---|---|
| Shear strength (MPa) | 4.1 | 6.2 | 11.4 | 13.7 | 12.5 | 12.7 | 6.3 | 1.4 | 10.1 |

Referring to Table 2, it may be identified that the shear strength at 120 °C in Present Examples 3 to 6 in which a ratio of a weight of the cyanurate compound and a weight of the naphthalene-based diepoxy-based resin is in a range of 6:1 to 8:1 is greater than that in Present Examples 1, 2, and 7, and Comparative Examples.

The descriptions of the presented embodiments have been provided so that a person of ordinary skill in the art of any the present disclosure may use or practice the present disclosure. Various modifications to these embodiments will be apparent to those skilled in the art of the present disclosure, and the general principles defined herein may be applied to other embodiments without departing from the scope of the present disclosure.

## Claims

1. An epoxy-based composition comprising:
a cyanurate compound having a following Chemical Formula (II); and
an epoxy resin,

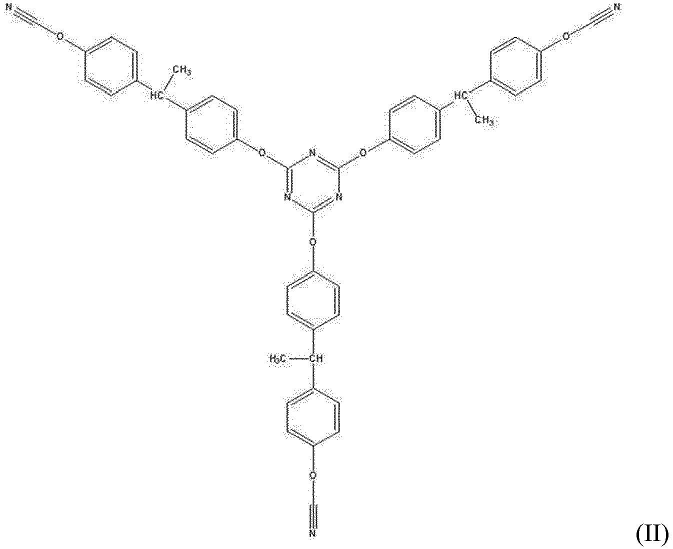

2. The epoxy-based composition of claim 1, wherein the epoxy resin includes a diepoxy-based resin.

3. The epoxy-based composition of claim 2, wherein the epoxy resin includes an aromatic ring.

4. The epoxy-based composition of claim 3, wherein the epoxy resin includes a naphthalene-based diepoxy-based resin having a following Chemical Formula (III): 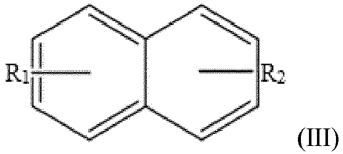 where each of R₁ and R₂ independently represents an epoxy-containing functional group.

5. The epoxy-based composition of claim 4, wherein each of R₁ and R₂ independently represents a functional group having a following Chemical Formula (IV): 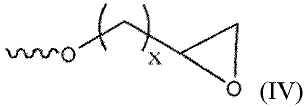 where x is an integer from 1 to 5.

6. The epoxy-based composition of claim 5, wherein in the Chemical Formula (IV), x is 1.

7. The epoxy-based composition of claim 6, wherein the epoxy resin includes an epoxy resin having a following Chemical Formula (V):

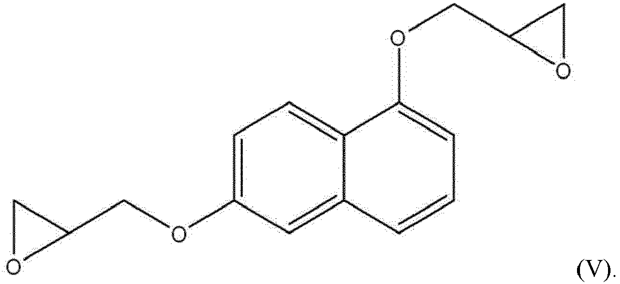

8. The epoxy-based composition of claim 1, wherein a ratio of a weight of the cyanurate compound and a weight of the epoxy resin is in a range of 1:9 to 9:1.

9. The epoxy-based composition of claim 4, wherein a ratio of a weight of the cyanurate compound and a weight of the naphthalene-based diepoxy-based resin is in a range of 6:1 to 8:1.

10. A two-component epoxy adhesive composition comprising:
a resin part; and
a curing agent part,
wherein the resin part contains an epoxy adhesive intermediate composition, wherein the epoxy adhesive intermediate composition includes the epoxy-based composition according to one of claims 1 or 8.

11. The two-component epoxy adhesive composition of claim 10, wherein a shear strength of the two-component epoxy adhesive composition at room temperature is in a range of 19.5 to 25 MPa (according to ASTM D 1002).

12. A two-component epoxy adhesive composition comprising:
a resin part; and
a curing agent part,
wherein the resin part contains an epoxy adhesive intermediate composition, wherein the epoxy adhesive intermediate composition includes the epoxy-based composition according to one of claims 2 to 7 or 9.

13. The two-component epoxy adhesive composition of claim 12, wherein a shear strength at 115 to 125 °C of the two-component epoxy adhesive composition is in a range of 10.5 to 15 MPa (according to ASTM D 1002).

## Patentansprüche

1. Zusammensetzung auf Epoxidbasis, umfassend:
eine Cyanuratverbindung mit der folgenden chemischen Formel (II); und
ein Epoxidharz,

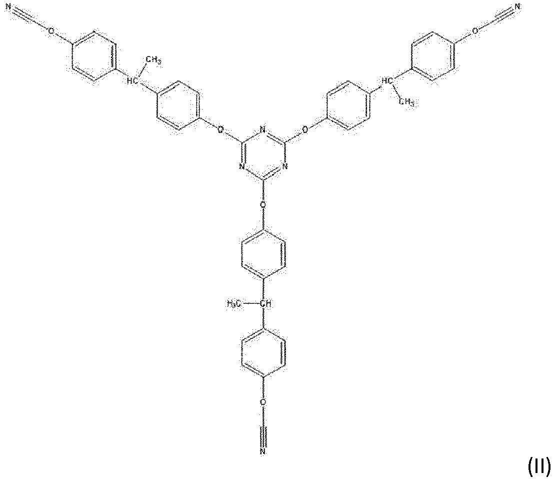

2. Zusammensetzung auf Epoxidbasis nach Anspruch 1, wobei das Epoxidharz ein Harz auf Diepoxidbasis beinhaltet.

3. Zusammensetzung auf Epoxidbasis nach Anspruch 2, wobei das Epoxidharz einen aromatischen Ring beinhaltet.

4. Zusammensetzung auf Epoxidbasis nach Anspruch 3, wobei das Epoxidharz ein Diepoxidharz auf Naphthalinbasis mit einer folgenden chemischen Formel (III) beinhaltet: 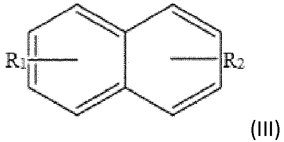 wobei R₁ und R₂ jeweils unabhängig voneinander eine epoxidhaltige funktionelle Gruppe darstellen.

5. Zusammensetzung auf Epoxidbasis nach Anspruch 4, wobei R₁ und R₂ jeweils unabhängig voneinander eine funktionelle Gruppe mit der folgenden chemischen Formel (IV) darstellen: 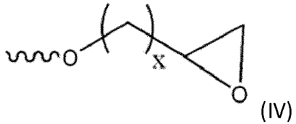 wobei x eine ganze Zahl von 1 bis 5 ist.

6. Zusammensetzung auf Epoxidbasis nach Anspruch 5, wobei in der chemischen Formel (IV) x 1 ist.

7. Zusammensetzung auf Epoxidbasis nach Anspruch 6, wobei das Epoxidharz ein Epoxidharz mit der folgenden chemischen Formel (V) beinhaltet:

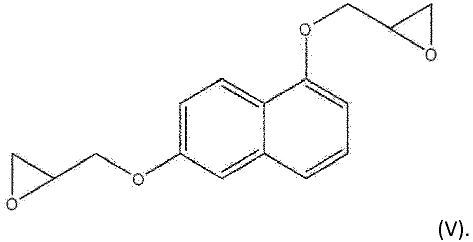

8. Zusammensetzung auf Epoxidbasis nach Anspruch 1, wobei ein Verhältnis zwischen einem Gewicht der Cyanuratverbindung und einem Gewicht des Epoxidharzes in einem Bereich von 1:9 bis 9:1 liegt.

9. Zusammensetzung auf Epoxidbasis nach Anspruch 4, wobei ein Verhältnis zwischen einem Gewicht der Cyanuratverbindung und einem Gewicht des Diepoxidharzes auf Naphthalinbasis in einem Bereich von 6:1 bis 8:1 liegt.

10. Zweikomponenten-Epoxidklebstoffzusammensetzung, umfassend:
ein Harzteil; und
ein Härtungsmittelteil,
wobei das Harzteil eine Epoxidklebstoff-Zwischenzusammensetzung enthält, wobei die Epoxidklebstoff-Zwischenzusammensetzung die Zusammensetzung auf Epoxidbasis nach einem der Ansprüche 1 oder 8 beinhaltet.

11. Zweikomponenten-Epoxidklebstoffzusammensetzung nach Anspruch 10, wobei eine Scherfestigkeit der Zweikomponenten-Epoxidklebstoffzusammensetzung bei Raumtemperatur in einem Bereich von 19,5 bis 25 MPa (gemäß ASTM D 1002) liegt.

12. Zweikomponenten-Epoxidklebstoffzusammensetzung, umfassend:
ein Harzteil; und
ein Härtungsmittelteil,
wobei das Harzteil eine Epoxidklebstoff-Zwischenzusammensetzung enthält, wobei die Epoxidklebstoff-Zwischenzusammensetzung die Zusammensetzung auf Epoxidbasis nach einem der Ansprüche 2 bis 7 oder 9 beinhaltet.

13. Zweikomponenten-Epoxidklebstoffzusammensetzung nach Anspruch 12, wobei eine Scherfestigkeit der Zweikomponenten-Epoxidklebstoffzusammensetzung bei 115 bis 125 °C in einem Bereich von 10,5 bis 15 MPa (gemäß ASTM D 1002) liegt.

## Revendications

1. Composition à base d'époxy comprenant :
un composé cyanurate présentant une Formule chimique (II) suivante ; et
une résine époxy,

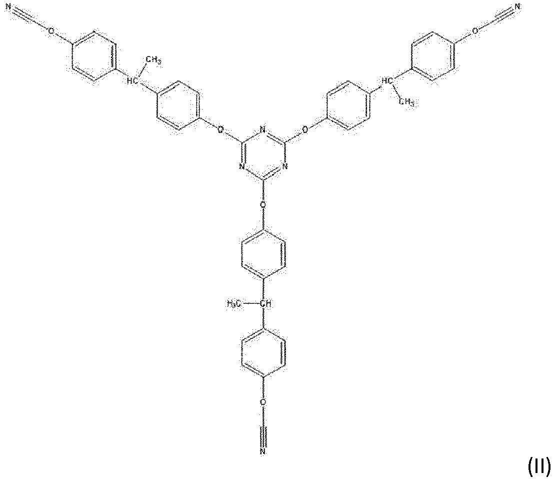

2. Composition à base d'époxy selon la revendication 1, dans laquelle la résine époxy inclut une résine à base de diépoxy.

3. Composition à base d'époxy selon la revendication 2, dans laquelle la résine époxy inclut un cycle aromatique.

4. Composition à base d'époxy selon la revendication 3, dans laquelle la résine époxy inclut une résine à base de diépoxy à base de naphtalène présentant une Formule chimique (III) suivante : 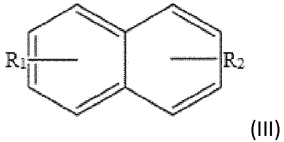 où chacun de R₁ et R₂ représente indépendamment un groupe fonctionnel contenant un époxy.

5. Composition à base d'époxy selon la revendication 4, dans laquelle chacun de R₁ et R₂ représente indépendamment un groupe fonctionnel présentant une Formule chimique (IV) suivante : 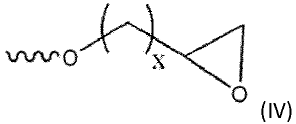 où x est un nombre entier de 1 à 5.

6. Composition à base d'époxy selon la revendication 5, dans laquelle, dans la Formule chimique (IV), x vaut 1.

7. Composition à base d'époxy selon la revendication 6, dans laquelle la résine époxy inclut une résine époxy présentant une Formule chimique (V) suivante :

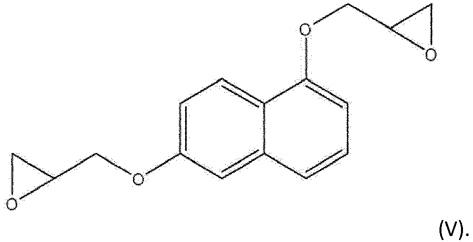

8. Composition à base d'époxy selon la revendication 1, dans laquelle un rapport entre le poids du composé cyanurate et le poids de la résine époxy est compris dans une plage de 1:9 à 9:1.

9. Composition à base d'époxy selon la revendication 4, dans laquelle un rapport entre le poids du composé cyanurate et le poids de la résine à base de diépoxy à base de naphtalène est compris dans une plage de 6:1 à 8:1.

10. Composition adhésive époxy à deux composants comprenant :
une partie résine ; et
une partie agent durcisseur,
dans laquelle la partie résine contient une composition intermédiaire adhésive époxy, dans laquelle la composition intermédiaire adhésive époxy inclut la composition à base d'époxy selon l'une des revendications 1 ou 8.

11. Composition adhésive époxy à deux composants selon la revendication 10, dans laquelle une résistance au cisaillement de la composition adhésive époxy à deux composants à température ambiante est comprise dans une plage de 19,5 à 25 MPa (selon ASTM D 1002).

12. Composition adhésive époxy à deux composants comprenant :
une partie résine ; et
une partie agent durcisseur,
dans laquelle la partie résine contient une composition intermédiaire adhésive époxy, dans laquelle la composition intermédiaire adhésive époxy inclut la composition à base d'époxy selon l'une des revendications 2 à 7 ou 9.

13. Composition adhésive époxy à deux composants selon la revendication 12, dans laquelle une résistance au cisaillement à 115 à 125 °C de la composition adhésive époxy à deux composants est comprise dans une plage de 10,5 à 15 MPa (selon ASTM D 1002).
